# EUROPEAN PATENT APPLICATION

(11) **EP 1 204 263 A1**
(43) Date of publication of application: **08.05.2002**
(21) Application number: 00123872.4
(22) Date of filing: 02.11.2000
(51) Int. Cl.: H04M 3/42

(54) **Method and system for directing telephone calls**

(71) Applicant: Pointel Systems Incorporated, Winlington, Delaware 19801 (US)
(72) Inventor: Sagy, Ariel, Herzeliya 46683 (IL)
(74) Representative: VOSSIUS & PARTNER

(57) **Abstract**

A device for use in a system of directing a subscriber's phone calls to a selected telephone. The device is configured to communicate with a mobile telephone and with a central office maintaining a database of subscribers including, for each subscriber, one or more identifiers of a mobile phone associated with the subscriber

## Description

### FIELD OF THE INVENTION

The present invention relates to telephone communication systems.

### BACKGROUND OF THE INVENTION

In a one number telephone system, a personal number is assigned to each subscriber. The subscriber periodically informs a central office of a telephone number to which bis telephone calls are to be directed. This is accomplished by the subscriber sending a message to the central office. Typically, this message is sent by the subscriber depressing a long sequence of keys on his mobile phone's keypad. The sequence usually involves a telephone number for contacting the provider, an authorization code previously provided to the subscriber, and the telephone number of the selected telephone. An individual wishing to phone the subscriber dials the subscribers personal number. The central office, upon receiving the call, directs the call to the last telephone number of which the subscriber has informed the central office. U. S. Patent No. 5,909,650, for example, describes such a telephone service based upon a single personal number.

### SUMMARY OF THE INVENTION

The present invention provides a device and system for allowing a subscriber to inform the central office to which telephone his phone calls are to be directed. In accordance with the invention, adjacent to each telephone in a telephone network a device referred to herein as a *"mobile phone cradle"* or simply a *"cradle"*, is placed. As described in detail below, the mobile phone cradle is used by a mobile phone subscriber to inform the central office to direct his calls to the telephone adjacent to the cradle.

The cradle is configured to communicate with a subscriber's mobile phone. In one embodiment, the mobile phone communicates with the cradle upon being placed in a socket located on the surface of the cradle configured to receive a mobile phone. In a second embodiment, communication between the cradle and the mobile phone is wireless. The cradle may comprise a memory for storing data such as the telephone number of the adjacent telephone. An input device such as a keyboard may be used to input data into the memory. A subscriber wishing to have his telephone calls directed to the adjacent telephone, communicates an identifier of his mobile phone to the cradle. The identifier may be, for example, the telephone number of the mobile phone or any other unique number associated with the mobile phone. The identifier is communicated to the cradle either by placing the mobile phone in the socket of the cradle, or, in the case of wireless communication by bringing the mobile phone into proximity with the cradle and possibly depressing a predetermined sequence of keys on the mobile phone's keypad.

A processor located in the cradle recalls from the memory the telephone number of the adjacent telephone to which the calls are to be directed. The processor then transmits a message to a central office indicating that telephone calls for the subscriber indicating that telephone calls for the subscriber are to be directed to the telephone adjacent to the cradle. The message may be transmitted over any communications network such as a wired or wireless telephone system, a computer network such as the Internet or an intranet, or by satellite communication. The central office, upon receiving a call directed to the subscriber, directs the call to the adjacent telephone as is known in the art, for example, as disclosed in U.S. Patent No. 5,909,650.

Thus in its first aspect, the present invention provides a device configured to communicate with a mobile telephone and further configured to communicate with a central office maintaining a database of subscribers including, for each subscriber, one or more identifiers of at least one mobile phone associated with the subscriber.

In its second aspect the invention provides a system for directing an individual's telephone calls to a selected telephone, the system comprising a device according to the invention.

In its third aspect the invention provides a method for directing an individual's telephone calls to a selected telephone, the individual having a mobile telephone, the method comprising steps of
**(a)** communicating to a device according to the invention an identifier of the mobile telephone;
**(b)** communicating to a central office the identifier of the mobile phone and an identifier of the selected telephone;
**(c)** upon receiving a telephone call for the individual by the central office, directing the call to the selected telephone.

### BRIEF DESCRIPTION OF THE DRAWINGS

In order to understand the invention and to see how it may be carried out in practice, a preferred embodiment will now be described, by way of non-limiting example only, with reference to the accompanying drawings, in which:
**Fig. 1** shows a system for directing telephone calls;
**Fig. 2** shows an embodiment of a mobile phone cradle in accordance with the invention;
**Fig. 3** shows a second embodiment of a cradle in accordance with the invention; and
**Fig. 4** shows the internal structure of the cradles of Figs. 2 and 3.

### DETAILED DESCRIPTION OF THE INVENTION

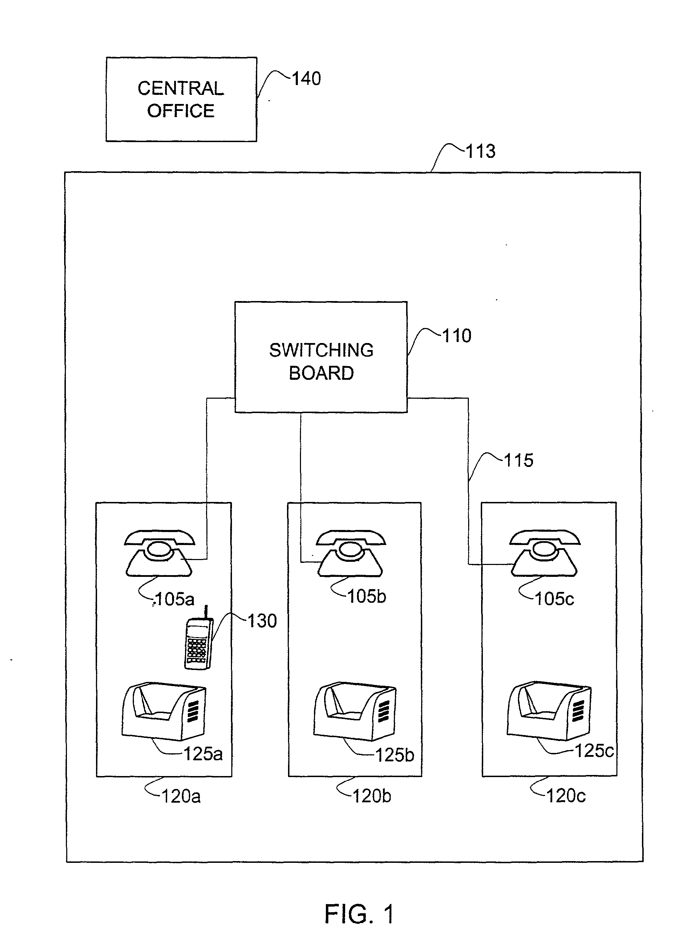

Referring to Fig. 1, a system for directing telephone calls is shown. The system includes one or more telephone networks such as the telephone network **115,** and possibly others (not shown). Each telephone system includes a plurality of telephones **105** such as the wired telephones **105a, 105b,** and **105c.** The network **115** is coupled to a switching board **110.** Telephones **105a, 105b,** and **105c** are located in locations **120a, 120b,** and **120c,** respectively. In accordance with the invention, adjacent to each telephone **105** is a mobile phone cradle **125.** As described in detail below, the mobile phone cradle **125** is used by a subscriber to inform a central office **140** to direct his phone calls to the telephone **105** adjacent to the cradle **125.** A mobile telephone **130** may be carried anywhere by the subscriber, but is shown to be in the location **120a.** The cradle **125** communicates to the central office **140** in order to inform the central office **140** to which telephone the subscriber's calls are to be directed. Communication between the cradle **125** and the central office **140** may be over any communications network such as a wired or wireless telephone system, a computer network such as the Internet or an intranet, or by satellite communication.

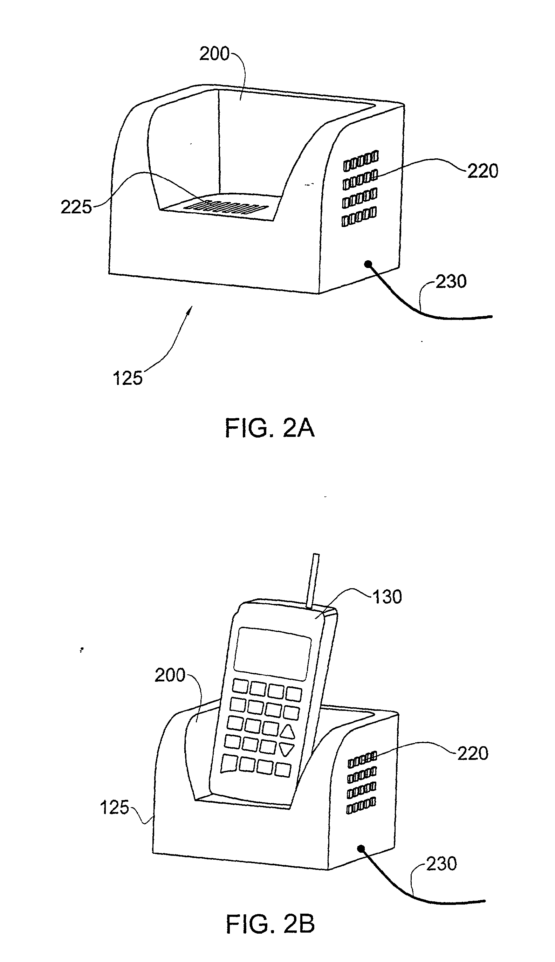

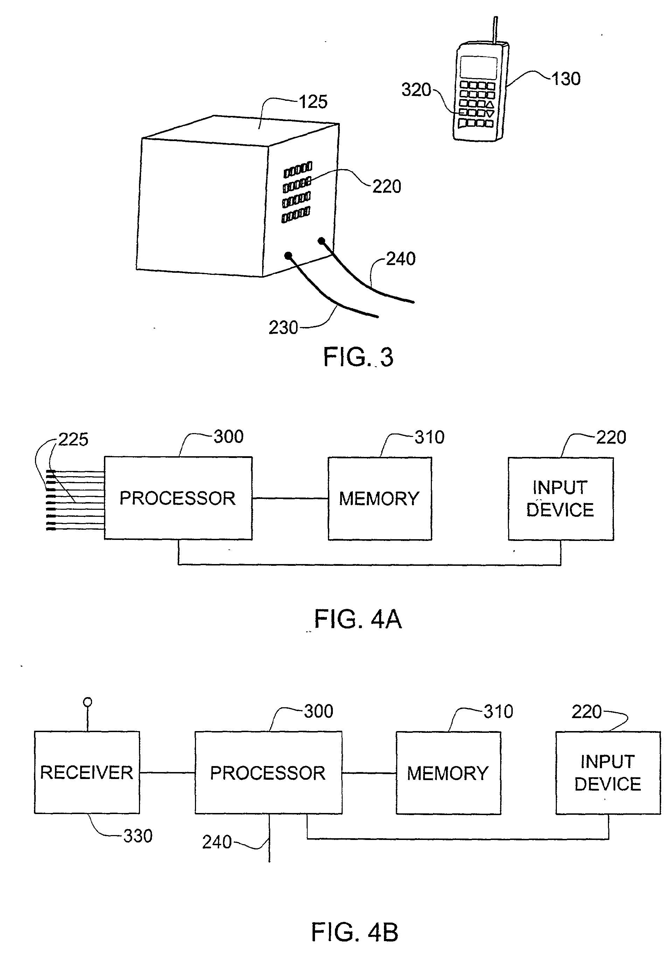

Fig. 2a shows one embodiment of the mobile phone cradle **125.** The cradle communicates with the mobile phone **130.** The cradle **125** has a socket **200** configured to receive a mobile telephone such as the mobile telephone **130.** An input device such as a keyboard **220** is used to input data into a memory **310** to be described in reference to Fig. 4. The data may be, for example, the telephone number of the adjacent telephone **105.** A subscriber arriving at the location **120a**, for example, with his mobile phone **130,** and wishing to have his incoming telephone calls directed to the telephone **105a,** places his mobile phone **130** in the socket **200** of the cradle **125a** adjacent to the telephone **125a,** as shown in Fig. 2b. Conducting contacts **225** at the bottom of the socket **200** are configured to contact serial output contacts of a mobile phone such as the mobile phone **130,** when the mobile phone is in the socket **200** of the cradle **125.** This allows communication between the mobile phone **130** and a processor **300** located inside the cradle **125,** to be described in reference to Fig. 4. The cradle **125** may be connected to an external power source by a cable **230.**

Fig. 3 shows a second embodiment of the cradle **125.** This embodiment has features in common with the embodiment of Fig. 2, and Similar components have been given the same reference numeral. This embodiment differs from the embodiment of Fig. 2 in that the cradle **125** of Fig. 3 is configured to communicate with the mobile phone **130** wirelessly. In this case, the mobile phone **130** has been configured to contain a chip capable of transmitting to the cradle of Fig. 3 an identifier when the phone **130** is brought into proximity with the cradle **125** of Fig. 3. The identifier may be transmitted automatically when the mobile phone **130** is brought into proximity with the cradle **125,** or a predetermined key or sequence of keys may be depressed on a keypad **320** of the phone **130** or on the keyboard **220** of the cradle **125.** The cradle **125** of Fig. 3 has a receiver **330,** to be described in reference to Fig. 4b, to receive this information.

Fig. 4a shows the internal structure of the cradle **125** of Fig. 2. The contacts **225** are connected to the processor **300** that thus receives from the mobile phone **130** an identifier of the mobile phone **130** when the phone **130** is in the socket **200.** The identifier may be, for example, the telephone number of the phone **130,** or another number unique to the phone **130.** The processor **300** then recalls from the memory **310** the telephone number of the adjacent telephone, for example, the telephone **105a.** The processor then transmits a message to the central office **140** as described above with reference to Fig. 1, indicating that telephone calls for the mobile phone **130** are to be directed to the telephone **105a.** The message may be transmitted using the mobile phone **130** in the socket **200** of the cradle. Upon receiving this information from the cradle, the central office updates its database to indicate the current telephone to which the subscriber's calls are to be directed. The central office **140,** upon receiving a call directed to the subscriber, directs the call to the switching board **110** of the telephone network **115** with instructions to direct the call to the telephone **105a.** When the subscriber is ready to leave the location **120a,** and no longer wishes to direct his phone calls to the phone **105a,** he communicates this to the cradle, for example, by removing the mobile phone **130** from the socket **200** of the cradle **125a.** The processor **300** then transmits a message to the central office **130** that calls to the mobile phone **130** are to be directed to a predetermined default telephone such as the mobile phone **130.**

Fig. 4b shows the internal structure of the cradle **125** of Fig. 3. The internal structure of the cradle of Fig. 3 is similar to that of Fig. 2, and similar components have been given the same identifying numeral. As shown in Fig. 4b, this cradle contains the receiver **330** that receives information relating to an identifier of the mobile phone 130 from the mobile phone **130.** The information is sent to the processor **300.** The processor **300** then recalls from the memory **310** the telephone number of the adjacent telephone, for example, the telephone **105a.** The processor then transmits a message to the central office **140** as described above with reference to Fig. 1, indicating that telephone calls for the mobile phone **130** are to be directed to the telephone **105a.** The message may be transmitted over a phone line **240** such as the phone line of the telephone **105a,** where it is processed as described above in reference to Fig. 4a.

## Claims

1. A device configured to communicate with a mobile telephone and further configured to communicate with a central office maintaining a database of subscribers including, for each subscriber, one or more identifiers of at least one mobile phone associated with the subscriber.

2. The device according to Claim 1, wherein communication with a mobile phone comprises transmitting an identifier of the mobile phone to the device.

3. The device according to Claim 1 or 2 wherein communication with the central office comprises transmitting an identifier of a mobile telephone, the mobile telephone being associated with a subscriber.

4. The device according to anyone of the previous claims wherein communication with the central office comprises transmitting an identifier of a telephone associated with the device.

5. The device according to anyone of the previous claims comprising a socket configured to receive a mobile telephone, the socket having electrical contacts capable of contacting serial port contacts of a mobile telephone when the mobile telephone is received in the socket so as to allow communication between the device and the mobile phone.

6. The device according to Claim 5 wherein communication between the device and the central office involves transmitting a message with a mobile phone received in the socket.

7. The device according to any one of Claims 1 to 4 comprising a receiver configured to receive wireless messages from the mobile telephone.

8. The device according to any one of the previous claims further comprising a memory.

9. The device according to Claim 8 wherein the memory is configured to store data relating to an identifier of a telephone associated with the device.

10. The device according to any one of the previous claims further comprising a processor.

11. The device according to Claim 8 or 9 further comprising an input device for inputting data onto the memory.

12. A system for directing an individual's telephone calls to a selected telephone, the system comprising a device according to any one of the previous claims.

13. A method for directing an individual's telephone calls to a selected telephone, the individual having a mobile telephone, the method comprising steps of
**(a)** communicating to a device according to any one of Claims 1 to 11 an identifier of the mobile telephone;
**(b)** communicating to a central office the identifier of the mobile phone and an identifier of the selected telephone;
**(c)** upon receiving a telephone call for the individual by the central office, directing the call to the selected telephone.
